# EUROPEAN PATENT APPLICATION

(11) **EP 4 440 140 A1**
(43) Date of publication of application: **02.10.2024**
(21) Application number: 22897786.4
(22) Date of filing: 22.11.2022
(51) Int. Cl.: H04Q 11/00

(54) **ONU REGISTRATION METHOD, COMMUNICATION METHOD, ONR, OLT, ONU, OPTICAL COMMUNICATION SYSTEM, AND COMPUTER-READABLE STORAGE MEDIUM**

(30) Priority: 24.11.2021 CN 202111405195
(71) Applicant: ZTE Corporation, Shenzhen, Guangdong 518057 (CN)
(72) Inventor: ZHANG, Weiliang, Shenzhen, Guangdong 518057 (CN); MA, Zhuang, Shenzhen, Guangdong 518057 (CN); ZHANG, Haijun, Shenzhen, Guangdong 518057 (CN); YUAN, Liquan, Shenzhen, Guangdong 518057 (CN)
(74) Representative: Canzler & Bergmeier Patentanwälte Partnerschaft mbB
(86) International application number: PCT/CN2022/133447
(87) International publication number: WO 2023/093703

(57) **Abstract**

Provided in the present disclosure is an optical network unit (ONU) registration method, which is used for an optical network repeater (ONR). The method comprises: relaying interaction content between an optical line terminal (OLT) and an ONU, such that the ONU and the OLT complete discovery and ranging processes. Further provided in the present disclosure are a communication method, an ONR, an OLT, an ONU, an optical communication system, and a computer-readable storage medium.

## Description

### CROSS REFERENCE TO RELATED APPLICATIONS

The present disclosure claims the priority to Chinese Patent Application No. 202111405195.4 filed on November 24, 2021, the contents of which are incorporated herein by reference in their entirety.

### TECHNICAL FIELD

The present disclosure relates to the field of communication technology, and in particular, to an Optical Network Unit (ONU) registration method, a communication method, an Optical Network Relay (ONR), an Optical Line Terminal (OLT), an ONU, an optical communication system, and a computer-readable storage medium.

### BACKGROUND

Due to point-to-multipoint network topology of a Passive Optical Network (PON) and a passive feature of an Optical Distribution Network (ODN), the networking technology of applying the PON to a home network attracts more and more attention from standard organizations and markets. On the one hand, the home network is a private network within the home of a user, and the user can exchange and share services through each ONU in the home network. On the other hand, the home network is a part of an access network, and the user can send or receive access services through each ONU in the home network. At present, current networking situations of the access network PON and the home network PON are not favorable for unified management and operation by operators.

### SUMMARY

In a first aspect of the present disclosure, there is provided an Optical Network Unit (ONU) registration method applied to an Optical Network Relay (ONR), including: relaying an interactive content between an Optical Line terminal (OLT) and an ONU, so as to enable the ONU and the OLT to complete discovery and ranging processes.

In a second aspect of the present disclosure, there is provided an ONU registration method applied to an OLT, including:
coordinating with an ONR to assign final identity information to an ONU.

In a third aspect of the present disclosure, there is provided a communication method applied to an ONR, including:
receiving to-be-relayed information, which is sent from an OLT or an ONU, with the ONU being an ONU registered at the OLT through the current ONR and having final identity information assigned by the OLT through the current ONR; and
relaying the to-be-relayed information between the OLT and the ONU registered at the OLT through the current ONR, with the final identity information of the ONU stored in the current ONR.

In a fourth aspect of the present disclosure, there is provided a communication method applied to an OLT, including:
sending to-be-relayed information to an ONR corresponding to the current OLT, so as to enable the ONR to forward the to-be-relayed information to a corresponding ONU, with the ONU being an ONU registered at the current OLT through the ONR.

In a fifth aspect of the present disclosure, there is provided an ONU registration method applied to an ONU, including:
providing discovery information to an ONR which discovers the current ONU; and
receiving final identity information corresponding to the current ONU sent by the ONR, with the final identity information assigned by an OLT corresponding to the ONR, so as to enable the current ONU to be registered at the OLT through the ONR.

In a sixth aspect of the present disclosure, there is provided a communication method applied to an ONU, including:
sending to-be-relayed information to an ONR corresponding to the current ONU, so as to enable the ONR to forward the to-be-relayed information to an OLT at which the current ONU is registered through the ONR.

In a seventh aspect of the present disclosure, there is provided an ONR, including:
a first storage module having stored thereon at least one of a first computer-executable program or a second computer-executable program; and
at least one first controller, and when the at least one first controller calls the first computer-executable program, the ONU registration method described in the first aspect of the present disclosure is implemented; and when the at least one first controller calls the second computer-executable program, the communication method described in the fourth aspect of the present disclosure is implemented.

In an eighth aspect of the present disclosure, there is provided an OLT, including:
a second storage module having stored thereon at least one of a third computer-executable program or a fourth computer-executable program; and
at least one second controller, and when the at least one second controller calls the third computer-executable program, the ONU registration method described in the second aspect of the present disclosure is implemented; and when the at least one second controller calls the fourth computer-executable program, the method described in the fifth aspect of the present disclosure is implemented.

In a ninth aspect of the present disclosure, there is provided an ONU, including:
a third storage module having stored thereon at least one of a fifth computer-executable program and/or a sixth computer-executable program; and
at least one third controller, and when the at least one third controller calls the fifth computer-executable program, the ONU registration method described in the third aspect of the present disclosure is implemented; and when the at least one third controller calls the sixth computer-executable program, the communication method described in the sixth aspect of the present disclosure is implemented.

In a tenth aspect of the present disclosure, there is provided an optical communication system, including an OLT, an ONR, and an ONU, and the OLT corresponds to at least one ONR, the ONR corresponds to at least one ONU, the OLT communicates with the at least one ONR corresponding to the OLT, the ONR communicates with the at least one ONU corresponding to the ONR, the ONR is the ONR described in the seventh aspect of the present disclosure, the OLT is the OLT described in the eighth aspect of the present disclosure, and the ONU is the ONU described in the ninth aspect of the present disclosure.

In an eleventh aspect of the present disclosure, there is provided a computer-readable storage medium, which stores a computer program which, when executed by a processor, implements any of the ONU registration methods or any of the communication methods described herein.

### BRIEF DESCRIPTION OF DRAWINGS

FIG. 1a is a schematic diagram of networking of an access network PON and a home network PON in the existing technology;
FIG. 1b is a schematic diagram of networking of an access network PON and a home network PON according to an embodiment of the present disclosure;
FIG. 2 is a flowchart illustrating an ONU registration method at an ONR side according to an embodiment of the present disclosure;
FIG. 3 is a flowchart illustrating an ONU registration method at an ONR side according to an embodiment of the present disclosure;
FIG. 4 is a flowchart illustrating an ONU registration method at an ONR side according to an embodiment of the present disclosure;
FIG. 5 is a flowchart illustrating an ONU registration method at an ONR side according to an embodiment of the present disclosure;
FIG. 6 is a flowchart illustrating an ONU registration method at an ONR side according to an embodiment of the present disclosure;
FIG. 7 is a flowchart illustrating an ONU registration method at an ONR side according to an embodiment of the present disclosure;
FIG. 8 is a flowchart illustrating an ONU registration method at an ONR side according to an embodiment of the present disclosure;
FIG. 9 is a flowchart illustrating an ONU registration method at an ONR side according to an embodiment of the present disclosure;
FIG. 10 is a schematic diagram of a passive-optical-access-system encapsulation-mode (XGEM) frame format according to an embodiment of the present disclosure;
FIG. 11 is a flowchart illustrating an ONU registration method at an OLT side according to an embodiment of the present disclosure;
FIG. 12 is a flowchart illustrating an ONU registration method at an OLT side according to an embodiment of the present disclosure;
FIG. 13 is a flowchart illustrating an ONU registration method at an OLT side according to an embodiment of the present disclosure;
FIG. 14 is a flowchart illustrating an ONU registration method at an OLT side according to an embodiment of the present disclosure;
FIG. 15 is a flowchart illustrating an ONU registration method at an ONU side according to an embodiment of the present disclosure;
FIG. 16 is a flowchart illustrating a communication method at an ONR side according to an embodiment of the present disclosure;
FIG. 17 is a flowchart illustrating a communication method at an ONR side according to an embodiment of the present disclosure;
FIG. 18 is a schematic diagram of a format of a Bandwidth map (BWmap) message according to an embodiment of the present disclosure;
FIG. 19 is a flowchart illustrating a communication method at an ONR side according to an embodiment of the present disclosure;
FIG. 20a is a schematic diagram illustrating an implementation of an ONR according to an embodiment of the present disclosure;
FIG. 20b is a schematic diagram illustrating an implementation of an ONR according to an embodiment of the present disclosure;
FIG. 21 is a flowchart illustrating a communication method at an ONU side according to an embodiment of the present disclosure;
FIG. 22 is a flowchart illustrating a communication method at an ONU side according to an embodiment of the present disclosure;
FIG. 23 is a block diagram of an ONR according to an embodiment of the present disclosure;
FIG. 24 is a block diagram of an ONR according to an embodiment of the present disclosure;
FIG. 25 is a block diagram of an OLT according to an embodiment of the present disclosure;
FIG. 26 is a block diagram of an OLT according to an embodiment of the present disclosure;
FIG. 27 is a block diagram of an ONU according to an embodiment of the present disclosure; and
FIG. 28 is a block diagram of an ONU according to an embodiment of the present disclosure.

### DETAIL DESCRIPTION OF EMBODIMENTS

In order to enable those of ordinary skill in the art to better understand the technical solutions of the present disclosure, an ONU registration method, a communication method, an ONR, an OLT, an optical communication system, and a computer-readable storage medium provided by the present disclosure are described in detail below with reference to the drawings.

Exemplary embodiments of the present disclosure will be described more fully below with reference to the drawings, but the exemplary embodiments described herein may be embodied in different forms, and the present disclosure should not be interpreted as being limited to the embodiments described herein. The embodiments are provided to make the present disclosure more thorough and complete, and may enable those of ordinary skill in the art to fully understand the scope of the present disclosure.

The embodiments described herein and the features therein can be combined with one another if no conflict is incurred.

The term "and/or" used herein includes any and all combinations of one or more associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "include" and/or "be made of" used herein indicate(s) the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

In the embodiments of the present disclosure, downlink information refers to information sent from an OLT to an ONR or an ONU, or information sent from an ONR to an ONU. Uplink information is information sent from an ONU to an ONR or an OLT, or information sent from an ONR to an OLT.

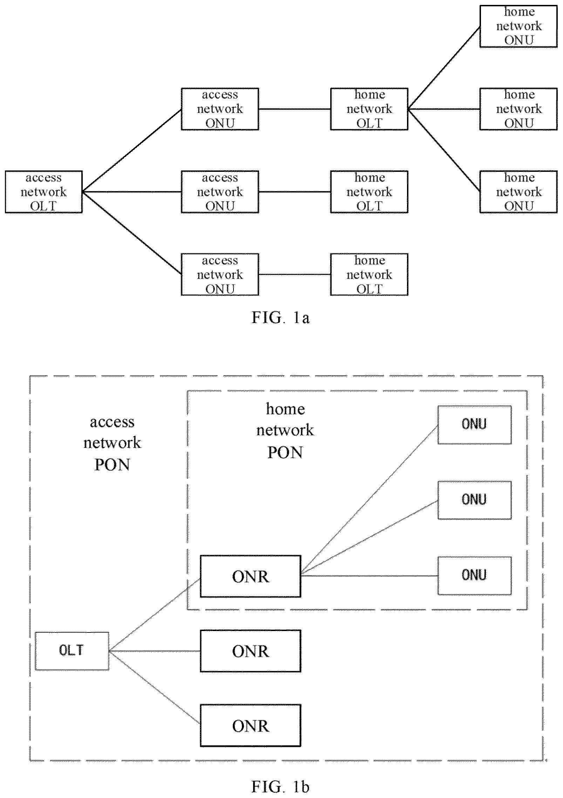

As shown in FIG. 1a which is a schematic diagram of networking of an access network PON and a home network PON in an existing technology, home network ONUs and home network OLTs constitute a home network PON, and a user can exchange and share services through each ONU in the home network PON. Meanwhile, the home network OLTs are connected to access network ONUs, and the home network PON is a part of an access network PON, that is, the home network ONUs, the home network OLTs, the access network ONUs, and an access network OLT constitute the home network PON, and the user can send or receive access services through the home network ONUs. However, the access network PON and the home network PON are two independent networks, and service operation and network management of the access network PON are independent of those of the home network PON, which is not favorable for unified management and operation by an operator, increases operation cost, and reduces network operation efficiency.

In view of the above, the present disclosure proposes that the unified management and operation of the access network PON and the home network PON can be realized because both the access network PON and the home network PON are PONs and the existing access network PON is very mature, so as to reduce the operation cost and increase the network operation efficiency. As shown in FIG. 1b, ONRs having both an OLT function and an ONU function may be added between the OLT and the ONUs, and the ONUs and the ONRs may constitute the home network PON; the ONUs, the OLT, and the ONRs may also constitute the access network PON, and both the ONUs and the ONRs may be managed by the OLT, in which case the ONRs are configured to relay various signalings and services between the OLT and the ONUs.

As an intermediate node between the OLT and the ONUs, the ONRs relay signalings and services with fixed or relatively fixed relay delays, that is, a time difference from the time of receiving to-be-relayed information by the ONR to the time of sending the to-be-relayed information by the ONR is a fixed value or a relatively fixed value, and a variation value of the time difference is within a certain range. For example, during an ONU registration process, a time difference from the time of receiving, by the ONR, an ONU discover request sent by the OLT to the time of sending the ONU discover request by the ONR is a fixed value or a relatively fixed value. For example, during the ONU registration process, a time difference from the time of receiving, by the ONR, an ONU ranging request sent by the OLT to the time of sending the ONU ranging request by the ONR is a fixed value or a relatively fixed value. The fixed or relatively fixed relay delay of the ONR is embodied in an ONU ranging result, and allows for a stable transmission delay between the OLT and the ONU, and is favorable for ensuring that the ONUs do not conflict with each other when sending uplink information. If necessary, the ONR may report the relay delay to the OLT, and the ONR may report the relay delay to the OLT actively or report the relay delay to the OLT at the request of the OLT.

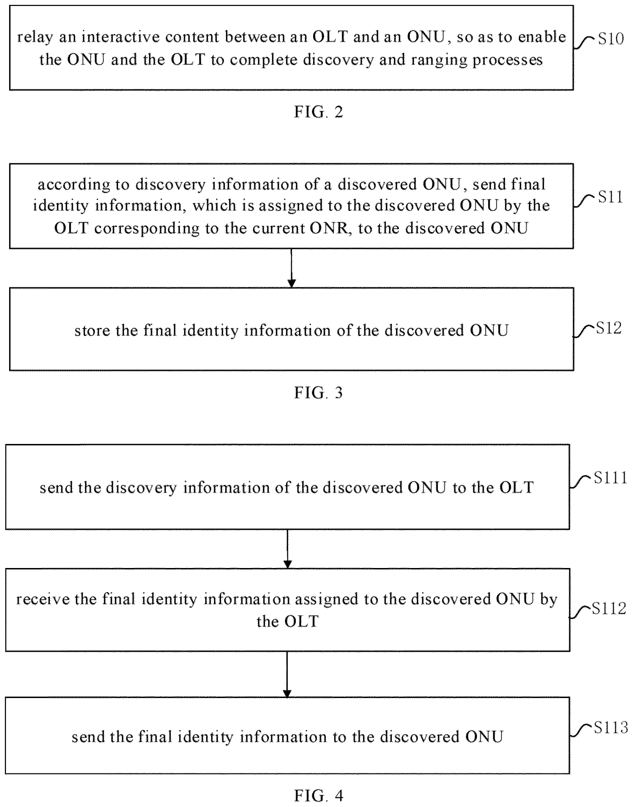

In one aspect of the present disclosure, there is provided an ONU registration method applied to an ONR. As shown in FIG. 2, an ONU registration method at an ONR side may include the following operation S10:
operation S10, relaying an interactive content between an OLT and an ONU, so as to enable the ONU and the OLT to complete discovery and ranging processes.

As can be seen from the above operation S10, with the ONU registration method provided by the present disclosure, the ONR relays the interactive content between the OLT and the ONU, so that the ONU and the OLT can complete the discovery and ranging processes. Subsequently, the ONU can be registered at the ONR, and can also be registered at the OLT through the ONR. That is, subsequently, the ONU can not only exchange and share home network services through the ONR but also perform transmission and reception of access network services with the OLT through the ONR. Thus, unified management of an access network PON and a home network PON can be achieved, and unified operation of the home network services and the access network services can also be achieved, which reduces operation cost and increases network operation efficiency.

In some implementations, before relaying the interactive content between the OLT and the ONU so as to enable the ONU and the OLT to complete the discovery and ranging processes (i.e., operation S10), the ONU registration method may further include: completing discovery and ranging processes of the current ONR and the OLT.

In some implementations, as shown in FIG. 3, relaying the interactive content between the OLT and the ONU (i.e. operation S10) may include the following operations S11 and S12:
operation S11, according to discovery information of a discovered ONU, sending final identity information, which is assigned to the discovered ONU by the OLT corresponding to the current ONR, to the discovered ONU; and
operation S12, storing the final identity information of the discovered ONU.

The ONR may perform topology discovery to discover ONUs downstream from the ONR, and store information of the downstream ONUs, such as discovery information or final identity information of the ONUs. The ONR may also report the information of the ONUs downstream from the ONR to the OLT or a management system, and the ONR may report the information of the downstream ONUs actively or report the information of the downstream ONUs in response to a query from the OLT or the management system. When discovering the downstream ONUs, the ONR may obtain the discovery information of the discovered ONUs. The discovery information of an ONU carries identity information of the ONU. In some implementations, the discovery information of the ONU may include at least one of a serial number of the ONU, authentication information of the ONU, or a MAC address of the ONU. In the present disclosure, the "final identity information" is identity information assigned by the OLT to the ONU through the ONR, and is also a final ONU-ID for distinguishing between different ONUs when the OLT communicates with the ONU through the ONR.

In a normal network status, a distance between each ONU and the OLT is different, which may cause a difference in transmission phase, such that the OLT may receive overlapping transmission data from different ONUs. The PON adopts a special method to synchronize transmission of the ONUs, and the special method is called ranging. In the ONU registration method provided by the present disclosure, the ONR may serve as an OLT in the home network PON, and thus has the functions of discovering the ONUs and performing ranging on the downstream ONUs.

Ranging information of the discovered ONU may include information such as a delay and a phase difference between the current ONR and the discovered ONU.

As can be seen from the above operations S11 and S12, with the ONU registration method provided by the present disclosure, the ONR obtains the discovery information of the discovered ONU, sends, according to the discovery information of the discovered ONU, the final identity information, which is assigned to the discovered ONU by the OLT corresponding to the current ONR, to the discovered ONU, and stores the final identity information of the discovered ONU. In this way, the OLT, the ONR, and the discovered ONU all record the final identity information of the discovered ONU, so that the discovered ONU can be successfully registered at the OLT and at the ONR. Subsequently, the ONU can not only exchange and share the home network services through the ONR according to the final identity information but also perform transmission and reception of the access network services with the OLT through the ONR according to the final identity information. Thus, unified management of the access network PON and the home network PON can be achieved, and unified operation of the home network services and the access network services can also be achieved, which reduces the operation cost and increases the network operation efficiency.

After discovering and performing ranging on the discovered ONU and obtaining the discovery information of the discovered ONU, the ONR may send the discovery information of the discovered ONU to the OLT, the OLT may assign the final ONU-ID to the discovered ONU according to the discovery information sent by the ONR, the ONR sends the final ONU-ID assigned to the discovered ONU by the OLT to the discovered ONU, and stores the final ONU-ID of the discovered ONU, thus completing the registration of the ONU at the ONR and the registration of the ONU at the OLT.

Accordingly, in some implementations, as shown in FIG. 4, sending, according to the discovery information of the discovered ONU, the final identity information, which is assigned to the discovered ONU by the OLT corresponding to the current ONR, to the discovered ONU (i.e. operation S11) may include the following operations S111 to S113:
operation S 111, sending the discovery information of the discovered ONU to the OLT;
operation S 112, receiving the final identity information assigned to the discovered ONU by the OLT; and
operation S 113, sending the final identity information to the discovered ONU.

The ONR may send the discovery information of the discovered ONU to the OLT to request to obtain ONU-ID configuration of the discovered ONU. When receiving the discovery information sent by the ONR, the OLT assigns the final identity information to the discovered ONU according to the discovery information of the ONU, and sends the final identity information to the ONR. The ONR sends the final identity information assigned to the discovered ONU by the OLT to the discovered ONU.

In the implementations provided by the present disclosure, the registration of the ONU at the ONR may be completed first, and then the registration of the ONU at the OLT may be completed. After discovering and performing ranging on the discovered ONU and obtaining the discovery information of the discovered ONU, the ONR may assign a temporary ONU-ID to the ONU according to the discovery information, and store the temporary ONU-ID of the discovered ONU, thus completing the registration of the ONU at the ONR. The discovered ONU may exchange and share the home network services through the ONR using the temporary ONU-ID. The ONR may also send the discovery information of the discovered ONU to the OLT to request to obtain the ONU-ID configuration of the discovered ONU. After receiving the final ONU-ID assigned to the discovered ONU by the OLT, the ONR may send the final identity information to the discovered ONU, and replace the locally stored temporary ONU-ID of the discovered ONU with the final ONU-ID of the discovered ONU, thus completing the registration of the ONU at the OLT. Subsequently, the discovered ONU may exchange and share the home network services through the ONR according to the final identity information, and perform transmission and reception of the access network services with the OLT through the ONR according to the final identity information.

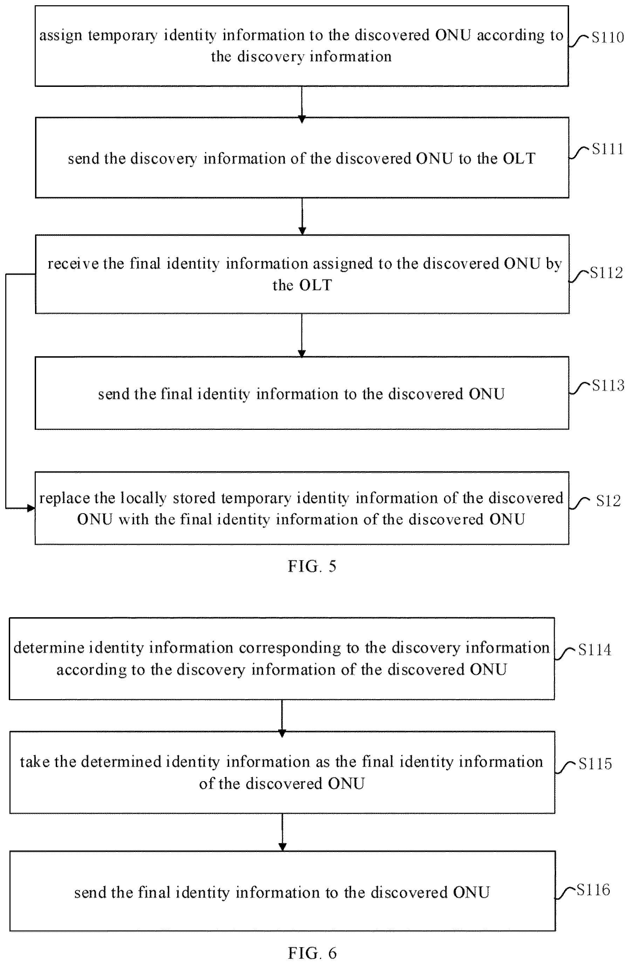

Accordingly, in some implementations, as shown in FIG. 5, before sending the discovery information of the discovered ONU to the OLT (i.e., operation S111), the ONU registration method may further include the following operation S110:
operation S110, assigning temporary identity information to the discovered ONU according to the discovery information.

Accordingly, after receiving the final identity information assigned to the discovered ONU by the OLT (i.e. operation S1 12), operation S12 is performed as follows: replacing the locally stored temporary identity information of the discovered ONU with the final identity information of the discovered ONU.

In addition to the case where the OLT determines basic information of the ONU according to the discovery information sent by the ONR and then assigns the final ONU-ID to the discovered ONU according to the basic information of the ONU, there is a case where the OLT may generate each final ONU-ID in advance and send the final ONU-IDs to the ONR; and the ONR stores each final ONU-ID assigned by the OLT, and determines, after discovering the ONU downstream from the ONR and obtaining the discovery information of the discovered ONU, a proper final ONU-ID for the discovered ONU according to the discovery information of the discovered ONU and each final ONU-ID assigned in advance by the OLT.

Accordingly, in some implementations, the ONR pre-stores a list of final identity information assigned to ONUs by the OLT. As shown in FIG. 6, sending, according to the discovery information of the discovered ONU, the final identity information, which is assigned to the discovered ONU by the OLT corresponding to the current ONR, to the discovered ONU (i.e. operation S11) may include operations S114 to S116:
operation S 114, determining final identity information corresponding to the discovery information according to the discovery information of the discovered ONU and the list of final identity information;
operation S115, taking the determined final identity information as the final identity information of the discovered ONU; and
operation S116, sending the final identity information to the discovered ONU.

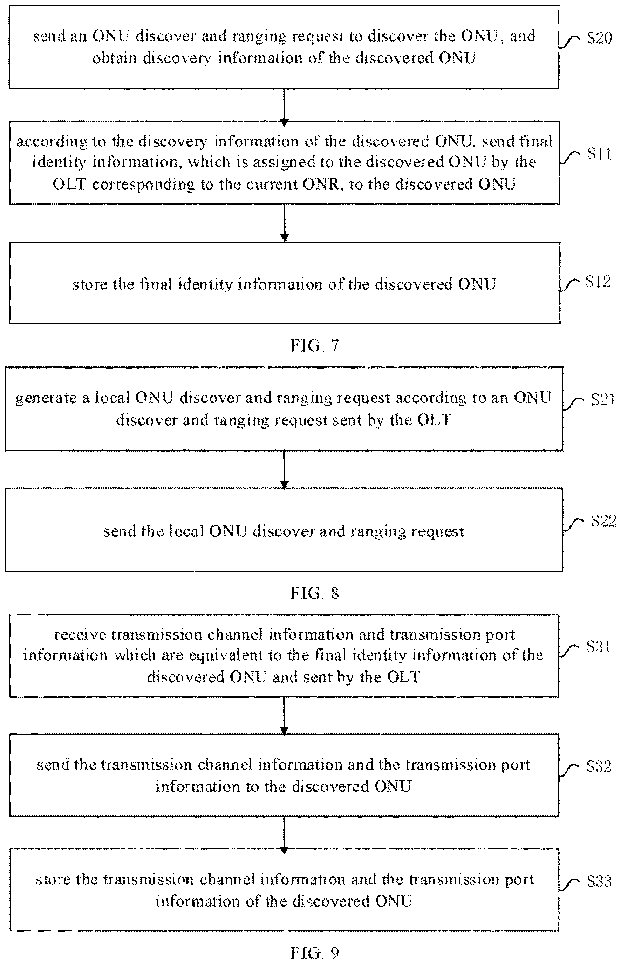

In the present disclosure, the OLT is desired to discover and perform ranging on the ONR, and the ONR is desired to discover and perform ranging on the ONU. In some implementations, the ONR opens a separate quiet window to achieve discovery and ranging of the ONU. That is, as shown in FIG. 7, before operation S11, the ONU registration method may further include the following operation S20:
operation S20, sending an ONU discover and ranging request to discover the ONU, and obtaining the discovery information of the discovered ONU.

Certainly, the present disclosure is not limited to the above. The OLT and the ONR may collaborate to complete topology discovery and open-window ranging. Instead of opening the separate quiet window, the ONR first perceives that the OLT opens a quiet window. Then, after collaborating with the OLT, the ONR opens the quiet window to the ONU. In some implementations, as shown in FIG. 8, relaying the interactive content between the OLT and the ONU (i.e. operation S10) may include the following operations S21 and S22:
operation S21, generating a local ONU discover and ranging request according to an ONU discover and ranging request sent by the OLT; and
operation S22, sending the local ONU discover and ranging request.

While the OLT is performing topology discovery to discover the ONR and performing ranging on the discovered ONR, the ONR may perform topology discovery to discover the ONU and performs ranging on the discovered ONU.

During the ONU registration process, a time different from the time of receiving, by the ONR, the ONU ranging request sent by the OLT to the time of sending the ONU ranging request by the ONR is a fixed value or a relative fixed value. Accordingly, in some implementations, a time difference between a moment of generating the local ONU discover and ranging request and a moment of receiving the ONU discover and ranging request sent by the OLT is within a first preset duration range.

After receiving an ONU discover and ranging response from the ONU downstream from the current ONR, the current ONR may also respond to the ONU discover and ranging request from the OLT. Accordingly, in some implementations, after sending the local ONU discover and ranging request (i.e. operation S22), the ONU registration method may further include: after receiving an ONU discover and ranging response corresponding to the local ONU discover and ranging request, generating a local ONU discover and ranging response, and sending the local ONU discover and ranging response to the OLT.

The final identity information of the ONU downstream from the current ONR is assigned by the OLT. Accordingly, in some implementations, the ONU registration method further includes: receiving the final identity information assigned to the discovered ONU by the OLT; and storing the final identity information of the discovered ONU, and sending the final identity information to the discovered ONU.

After the registration of the ONU at the ONR and the registration of the ONU at the OLT are completed, the OLT may further perform related configuration for the ONU through the ONR. Accordingly, in some implementations, as shown in FIG. 9, the ONU registration method may further include the following operations S31 to S33:
operation S31, receiving transmission channel information and transmission port information which are equivalent to the final identity information of the discovered ONU and sent by the OLT;
operation S32, sending the transmission channel information and the transmission port information to the discovered ONU; and
operation S33, storing the transmission channel information and the transmission port information of the discovered ONU.

In some implementations, the transmission channel information includes transmission container (T-CONT) information sent by the OLT with a Physical Layer Operations, Administration and Maintenance (PLOAM) message, and the transmission port information includes an XGEM Port-ID (an extended passive-optical-access-system encapsulation-mode port number) sent by the OLT with an ONU Management and Control Interface (OMCI) message.

The contents of the PLOAM message are shown in the following Table 1. As shown in Table 1, the PLOAM message carries ONU-ID, Message type ID (message type identification), SeqNo, Message_Content (message content) and MIC. ONU-ID occupies the first and the second octets, Message type ID occupies the third octet, SeqNo occupies the fourth octet, Message_Content occupies the fifth to the fortieth octets, and MIC occupies the forty-first to the forty-eighth octets.

**Table 1**

| Byte | Field | Description |
|---|---|---|
| 1^{st}-2^{nd} | ONU-ID | Identification of ONU |
| 3^{rd} | Message type ID | Message type identification |
| 4^{th} | SeqNo | serial number |
| 5^{th}-40^{th} | Message_Content | message content |
| 41^{st}-48^{th} | MIC | message integrity check |

In some implementations, the T-CONT information includes an Alloc-ID (an Allocation Identifier), and is carried in the PLOAM message by the OLT.

In some implementations, the OMCI message is sent in an XGEM frame format. Service data during execution of services is also sent in the XGEM frame format.

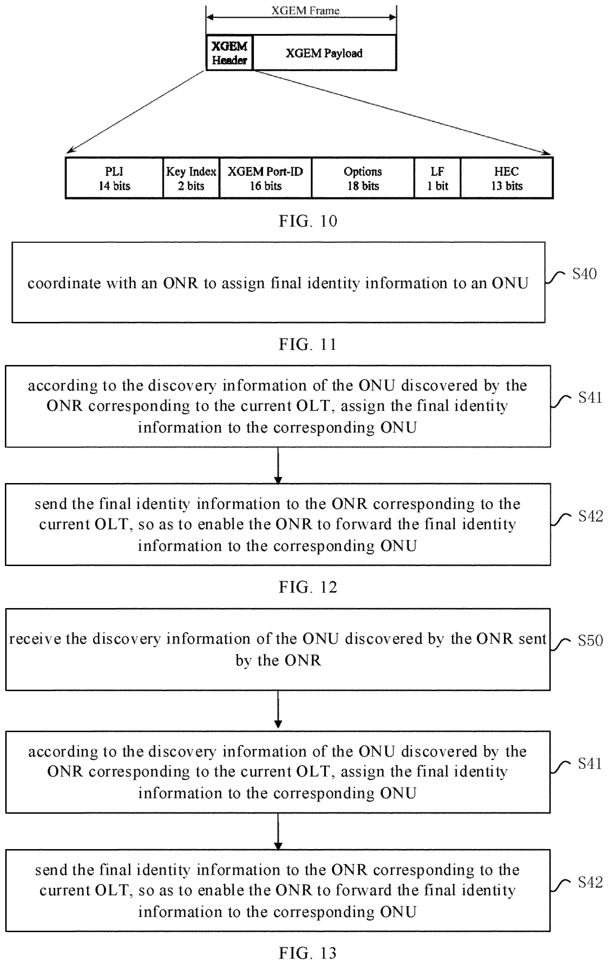

As shown in FIG. 10 which is a schematic diagram of an XGEM frame format according to the present disclosure, an XGEM frame (i.e., XGEM Frame) includes XGEM Header (a header) and XGEM Payload (a payload), and the XGEM Header includes PLI (Payload Length Indication) of 14 bits, Key Index of 2 bits, XGEM Port-ID of 16 bits, Options of 18 bits, LF (Last Fragment, indicating whether the current fragment is the last fragment) of 1 bit, and HEC (Hybrid Error Correction) of 13 bits. The XGEM Port-ID in the XGEM frame is equivalent to an ONU-ID. When the ONR receives the XGEM frame, the ONR analyzes (or parses) the XGEM frame to obtain the XGEM Port-ID carried in the XGEM frame, determines whether the XGEM frame belongs to an ONU downstream from the ONR according to the XGEM Port-ID, sends, when determining that the XGEM frame belongs to a certain downstream ONU, the XGEM Port-ID to the corresponding ONU, and stores the XGEM Port-ID of the ONU.

The ONU and the ONR constitute the home network PON, and the ONU, the ONR, and the OLT constitute the access network PON, and the OLT assigns the final ONU-ID to the ONU. Accordingly, as shown in FIG. 11, in one aspect of the present disclosure, an embodiment of the present disclosure further provides an ONU registration method applied to the OLT, and the ONU registration method may include the following operation S40:
operation S40, coordinating with an ONR to assign final identity information to an ONU.

Subsequently, the ONU can not only exchange and share the home network services through the ONR according to the final identity information but also perform transmission and reception of the access network services with the OLT through the ONR according to the final identity information. Thus, unified management of the access network PON and the home network PON can be achieved, and unified operation of the home network services and the access network services can also be achieved, which reduces the operation cost and increases the network operation efficiency.

After the ONU completes ranging and registration at the ONR, the OLT assigns the final identity information to the ONU according to discovery information of the ONU. Accordingly, in some implementations, as shown in FIG. 12, coordinating with the ONR to assign the final identity information to the ONU (i.e. operation S40) may include the following operations S41 and S42:
operation S41, according to the discovery information of the ONU discovered by the ONR corresponding to the current OLT, assigning the final identity information to the corresponding ONU; and
operation S42, sending the final identity information to the ONR corresponding to the current OLT, so as to enable the ONR to forward the final identity information to the corresponding ONU.

The final identity information may be determined by the OLT according to the discovery information of the ONU discovered by the ONR sent by the ONR, or may be determined according to discovery information of ONUs preset by the OLT.

As can be seen from the above operations S41 and S42, with the ONU registration method provided by the present disclosure, the OLT assigns the final identity information to the corresponding ONU according to the discovery information of the ONU discovered by the ONR corresponding to the current OLT, and sends the final identity information to the ONR. The ONU registration method applied to the OLT according to the present disclosure is desired to be performed in cooperation with the ONU registration method applied to the ONR according to the present disclosure. Therefore, the final identity information of the ONU is also sent by the ONR to the ONU. In this way, the OLT, the ONR, and the discovered ONU all record the final identity information of the discovered ONU, which indicates successful registration of the discovered ONU at the OLT and successful registration of the discovered ONU at the ONR. Subsequently, the ONU can not only exchange and share the home network services through the ONR according to the final identity information but also perform transmission and reception of the access network services with the OLT through the ONR according to the final identity information. Thus, unified management of the access network PON and the home network PON can be achieved, and unified operation of the home network services and the access network services can also be achieved, which reduces the operation cost and increases the network operation efficiency.

In addition to the aforesaid implementations, in some implementations, before assigning the final identity information to the corresponding ONU according to the discovery information of the ONU discovered by the ONR corresponding to the current OLT, the OLT may receive the discovery information of the ONU sent by the ONR. Accordingly, in some implementations, as shown in FIG. 13, before operation S41, the ONU registration method may further include the following operation S50:
operation S50, receiving the discovery information of the ONU discovered by the ONR sent by the ONR.

The OLT may configure final identity information to the ONR in advance. When performing registration and ranging of the ONU at the ONR, the ONR assigns the proper final identity information to the ONU. Accordingly, in some implementations, coordinating with the ONR to assign the final identity information to the ONU (i.e., operation S40) may include: configuring a list of final identity information and sending the list of final identity information to the ONR, so as to enable the ONR to determine final identity information from the list of final identity information after receiving the discovery information of the ONU discovered by the ONR and send the determined final identity information to the ONU discovered by the ONR.

Certainly, the present disclosure is not limited to the above. The ONR may also actively request the OLT to assign final identity information to an ONU downstream from the current ONR. Accordingly, in some implementations, coordinating with the ONR to assign the final identity information to the ONU (i.e., operation S40) may include: assigning the final identity information to the ONU according to an ONU discover response relayed by the ONR.

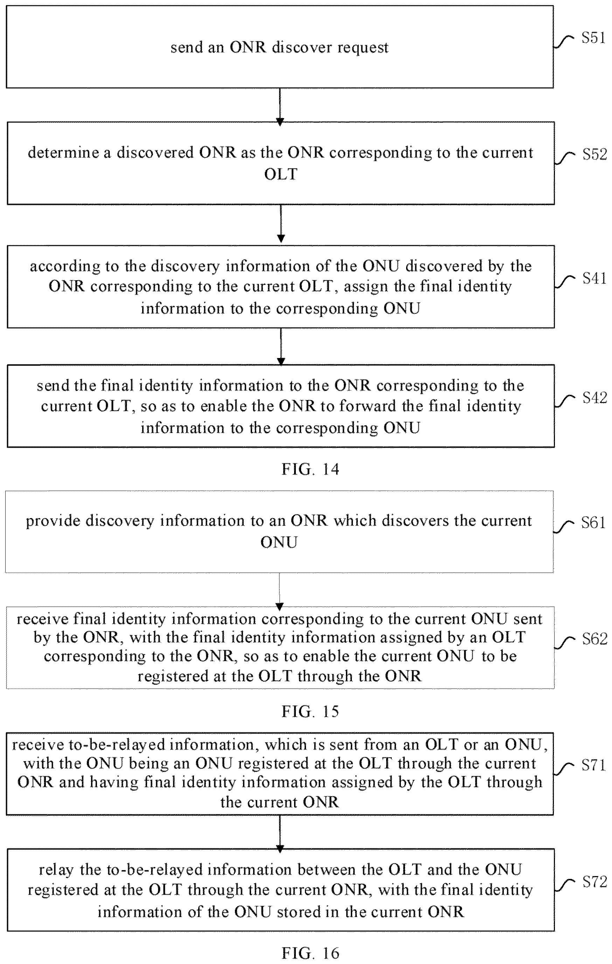

As described above, the OLT and the ONR may collaborate to complete topology discovery and open-window ranging. Instead of opening the separate quiet window, the ONR first perceives that the OLT opens the quiet window. Then, after collaborating with the OLT, the ONR opens the quiet window to the ONU. Accordingly, in some implementations, as shown in FIG. 14, before operation S41, the ONU registration method may further include the following operations S51 and S52:
operation S51, sending an ONR discover request; and
operation S52, determining a discovered ONR as the ONR corresponding to the current OLT.

After the registration of the ONU at the ONR and the registration of the ONU at the OLT are completed, the OLT may assign configuration information such as T-CONT information and an XGEM Port-ID to the ONU, and the ONR sends the configuration information such as the T-CONT information and the XGEM Port-ID assigned to the ONU by the OLT to the corresponding ONU, and stores the configuration information of the ONU such as the T-CONT information and the XGEM Port-ID. Accordingly, in some implementations, the ONU registration method may further include:
sending the T-CONT information and the XGEM-Port-ID, which are equivalent to the final identity information of the discovered ONU, to the ONR, so as to enable the ONR to relay the T-CONT information and the XGEM-Port-ID, which are equivalent to the final identity information of the discovered ONU, to the discovered ONU, with the T-CONT information sent by the current OLT with a PLOAM message, and the XGEM-Port-ID sent by the current OLT with an OMCI message.

After the registration of the ONU at the ONR and the registration of the ONU at the OLT are completed and the OLT assigns the configuration information such as the T-CONT information and the XGEM Port-ID to the ONU, the ONU can exchange and share the home network services through the ONR and perform transmission and reception of the access network services with the OLT through the ONR. During the processes of performing transmission and reception of the access network services, the ONR may relay various signalings and service data between the ONU and the OLT.

In one aspect of the present disclosure, there is provided an ONU registration method applied to an ONU. As shown in FIG. 15, the ONU registration method may include the following operations S61 and S62:
operation S61, providing discovery information to an ONR which discovers the current ONU; and
operation S62, receiving final identity information corresponding to the current ONU sent by the ONR, with the final identity information assigned by an OLT corresponding to the ONR, so as to enable the current ONU to be registered at the OLT through the ONR.

The ONU registration method applied to the ONU according to the present disclosure is executed by the ONU, and is performed in cooperation with the ONU registration method executed by the ONR and the ONU registration method executed by the OLT.

The ONU provides the discovery information of the current ONU to the ONR which discovers the current ONU, so that the ONR can send the final identity information corresponding to the discovery information of the current ONU, which is assigned by the OLT and sent to the ONR by the OLT, to the current ONU according to the discovery information.

After the ONU receives the final identity information corresponding to the discovery information of the current ONU which is assigned by the OLT and sent by the ONR, the operation of registering the ONU at the OLT through the ONR is completed.

As described above, the OLT may further achieve configuration for the ONU through the ONR. Accordingly, the ONU registration method may further include: receiving transmission channel information and transmission port information which are equivalent to the final identity information of the current ONU and sent by the ONR.

As described above, the transmission channel information includes the transmission container (T-CONT) information sent by the OLT with the PLOAM message, and the transmission port information includes the XGEM Port-ID sent by the OLT with the OMCI message.

In some implementations, the T-CONT information includes an Alloc-ID (an Allocation Identifier).

After the registration of the ONU at the ONR and the registration of the ONU at the OLT are completed and the OLT assigns the configuration information such as the T-CONT information and the XGEM Port-ID to the ONU, the ONU can exchange and share the home network services through the ONR and perform transmission and reception of the access network services with the OLT through the ONR. During the processes of performing transmission and reception of the access network services, the ONR may relay various signalings and services between the ONU and the OLT. Accordingly, as shown in FIG. 16, in one aspect of the present disclosure, there is provided a communication method applied to an ONR, and the communication method may include the following operations S71 and S72:
operation S71, receiving to-be-relayed information, which is sent from an OLT or an ONU, with the ONU being an ONU registered at the OLT through the current ONR and having final identity information assigned by the OLT through the current ONR; and
operation S72, relaying the to-be-relayed information between the OLT and the ONU registered at the OLT through the current ONR, with the final identity information of the ONU stored in the current ONR.

The to-be-relayed information may be uplink frame information or downlink frame information.

As can be seen from the aforesaid operations S71 and S72, with the communication method provided by the present disclosure, the ONR receives the to-be-relayed information (downlink information) sent by the OLT at which the ONU is registered through the current ONR or the to-be-relayed information (uplink information) sent by the ONU which is registered at the current ONR, and relays the to-be-relayed information between the OLT and the ONU, so that the ONU can perform transmission and reception of the access network services with the OLT through the ONR besides exchanging and sharing the home network services through the ONR, unified management of the access network PON and the home network PON can be achieved, and unified operation of the home network services and the access network services can also be achieved, which reduces the operation cost and increases the network operation efficiency.

As an intermediate node between the OLT and the ONU, the ONR has fixed or relatively fixed relay delays while relaying signalings and services, that is, a time difference from the time of receiving the to-be-relayed information by the ONR to the time of sending the to-be-relayed information by the ONR is a fixed value or a relatively fixed value, and a variation value of the time difference is within a certain range. Accordingly, in some implementations, a time difference between a moment of receiving the to-be-relayed information and a moment of relaying the to-be-relayed information is within a second preset duration range.

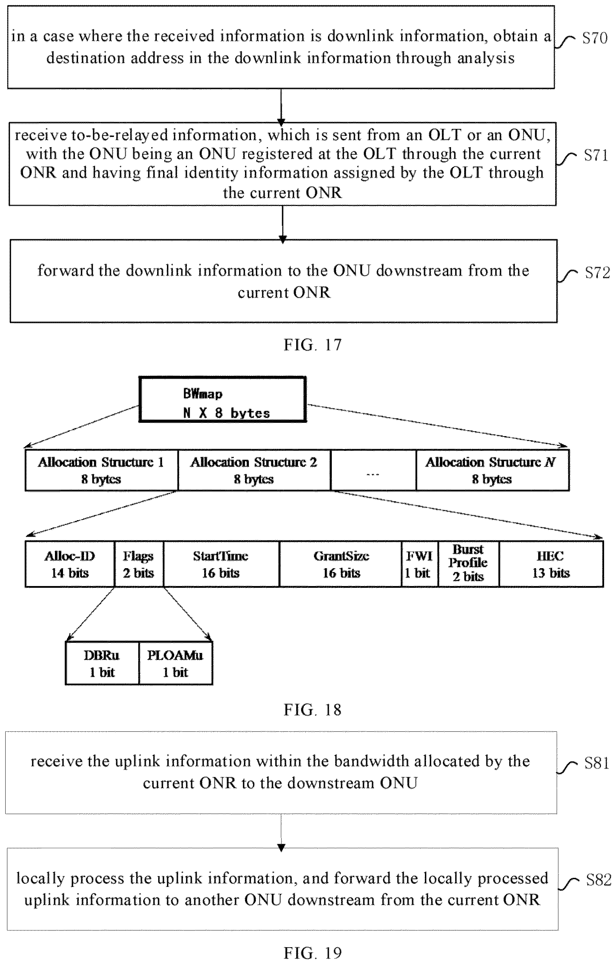

In some implementations, as shown in FIG. 17, before receiving the to-be-relayed information (i.e., operation S71), the communication method may further include the following operation S70:
operation S70, in a case where the received information is downlink information, obtaining a destination address in the downlink information through analysis.

When the destination address is an ONU downstream from the current ONR, the downlink information is the to-be-relayed information. Accordingly, operation S72 includes forwarding the downlink information to the ONU downstream from the current ONR.

It should be noted that the "destination address" in the present disclosure may be address information (i.e., an ONU-ID) of the final identity information assigned to the ONU by the OLT, or an address representing a relationship between the ONU and the ONR.

In the present disclosure, the downlink information may include a management frame and a data frame. Since there are a plurality of ONUs downstream from the current ONR, the ONR is desired to forward the to-be-relayed information to the ONU specified by the OLT. In some implementations, operation S72 is a broadcasting process, and when the ONR sends a broadcast message carrying the downlink information, all the ONUs downstream from the ONR can receive the downlink information, and the ONU corresponding to the destination address can also receive the downlink information.

It should be understood that, when receiving the downlink information having the destination address of a downstream ONU, the ONR relays the downlink information to the corresponding ONU; and when receiving the downlink information having the destination address of the current ONR, the ONR may process the downlink information by itself. For the downlink information having the destination address which is neither an address of the current ONR nor an address of the downstream ONU, the ONR may directly discard the downlink information.

Accordingly, in some implementations, in a case where the destination address is an address of the current ONR, the communication method may further include: storing the downlink information. In some implementations, the downlink information having the destination address of the current ONR may include at least one of the following information:
bandwidth information assigned by the OLT to the ONU registered at the OLT through the current ONR;
a Port-ID configured by the OLT with an OMCI message for the ONU registered at the OLT through the current ONR; or
T-CONT information configured by the OLT for the ONU registered at the OLT through the current ONR.

After receiving the downlink information having the destination address of the current ONR, the ONR may perform downlink bandwidth allocation and prepare for relaying uplink information.

As described above, the OLT may allocate an uplink bandwidth to the ONU with a BWmap message, and the ONU sends uplink information to the ONR within the uplink bandwidth, so as to enable the ONR to relay the uplink information to the OLT. In an application scenario where the downlink information is a bandwidth entry in the BWmap message, the destination address is in the form of an Alloc-ID. Accordingly, operation S70 may include: analyzing the bandwidth entry to obtain the Alloc-ID of the bandwidth entry.

In a case where the Alloc-ID of the bandwidth entry is an Alloc-ID of the ONU downstream from the current ONR, the Alloc-ID is the destination address. Accordingly, operation S72 may be performed as follows: forwarding the bandwidth entry to the ONU downstream from the current ONR, and locally reserving the uplink bandwidth corresponding to the bandwidth entry.

As shown in FIG. 18 which is a schematic diagram of a format of a BWmap message provided by the present disclosure, the BWmap message has N*8 bytes and includes N Allocation Structures (allocation structures) of 8 bytes, with N being greater than or equal to 1. Each Allocation Structure includes Alloc-ID of 14 bits, Flags of 2 bits, StartTime of 16 bits, GrantSize of 16 bits, FWI (Forced Wakeup Indication) of 1 bit, Burst Profile of 2 bits, and HEC of 13 bits. Each Flags includes DBRu (Dynamic Bandwidth Report upstream) of 1 bit and PLOAMu (PLOAM upstream) of 1 bit.

The BWmap message is used for the allocation of the uplink bandwidth by the OLT, and the Alloc-ID in the BWmap message is equivalent to the ONU-ID (e.g., in value). When the ONR receives the BWmap message sent by the OLT, the ONR analyzes bandwidth entries, i.e., the Allocation Structures, in the BWmap message one by one, and determines whether an Allocation structure belongs to an ONU downstream from the current ONR according to an Alloc-ID in the Allocation Structure. When determining that an Allocation structure belongs to a certain ONU downstream from the ONR, the ONR forwards the Allocation Structure to the corresponding ONU.

In an application scenario where the downlink information includes a PLOAM message, the destination address is in the form of an ONU-ID in the PLOAM message. Therefore, it is desired to determine whether the ONU-ID carried in the PLOAM message is an ONU-ID of an ONU downstream from the ONR. Accordingly, operation S70 may be performed as follows: analyzing an ONU-ID field of the PLOAM message to obtain the ONU-ID carried in the PLOAM message.

Accordingly, in a case where the ONU-ID carried in the PLOAM message is the ONU-ID of the ONU downstream from the current ONR, forwarding the downlink information to the ONU downstream from the current ONR may include: forwarding the PLOAM message to the ONU downstream from the current ONR.

When it is determined through network topology that the ONU-ID carried in the PLOAM message is the ONU downstream from the current ONR, the operation of forwarding the downlink information to the ONU downstream from the current ONR may be continuously performed.

In some implementations, the downlink information is an XGEM frame sent by the OLT, and obtaining the destination address in the downlink information through analysis includes: analyzing a Port-ID field of the XGEM frame to obtain a Port-ID carried in the XGEM frame; and in a case where the Port-ID carried in the XGEM frame is a Port-ID of the ONU downstream from the current ONR, forwarding the downlink information to the ONU downstream from the current ONR includes: forwarding the XGEM frame to the ONU downstream from the current ONR.

It is determined whether the Port-ID is the Port-ID of the ONU downstream from the current ONR, and if it is determined that the Port-ID is the Port-ID of the ONU downstream from the current ONR, the Port-ID carried in the downlink information is the destination address. Accordingly, operation S72 may be performed.

In the present disclosure, the OLT also allocates an uplink bandwidth to the ONU, and the ONU sends uplink information to the ONR within the uplink bandwidth. The ONR may determine whether a destination address of the received uplink information is an address of the current ONR or an address of the OLT according to an uplink bandwidth of the received information. Accordingly, in some implementations, receiving the to-be-relayed information (i.e., operation S71) includes receiving the uplink information received within the uplink bandwidth allocated by the OLT to the ONU registered at the OLT through the current ONR. Accordingly, operation S72 includes forwarding the uplink information to the OLT.

The ONR may also allocate an uplink bandwidth to a downstream ONU for the downstream ONU to exchange and share services through the ONR. Accordingly, in some implementations, the communication method may further include: allocating an uplink bandwidth to an ONU downstream from the current ONR.

The ONR not only manages the information of the local uplink bandwidth allocated by the OLT to the current ONR, but also stores the information of the uplink bandwidth allocated by the OLT to the ONU registered at the OLT through the current ONR. For the uplink information received within the uplink bandwidth allocated by the OLT to the ONU, the ONR relays, after determining the uplink information as the to-be-relayed information, the to-be-relayed information to the OLT. For the uplink information received within the local uplink bandwidth, the uplink information is an interactive content exchanged by downstream ONUs through the current ONR, so the ONR processes the uplink information locally and then forwards the processed uplink information to a corresponding ONU. Accordingly, in some implementations, as shown in FIG. 19, the communication method may further include the following operations S81 and S82:
operation S81, receiving the uplink information within the bandwidth allocated by the current ONR to the downstream ONU; and
operation S82, locally processing the uplink information, and forwarding the locally processed uplink information to another ONU downstream from the current ONR.

In the present disclosure, the ONR relays and forwards the management frame and the data frame at a same position in a service period. For example, in an uplink period, the ONR relays and forwards the management frame and the data frame at a position of a period of 125µs. Similarly, in a downlink period, the ONR relays and forwards the management frame and the data frame at the same position of the period of 125µs. Accordingly, in some implementations, relaying the to-be-relayed information between the OLT and the ONU registered at the OLT through the current ONR includes: relaying and forwarding the to-be-relayed information at a same position in a service period.

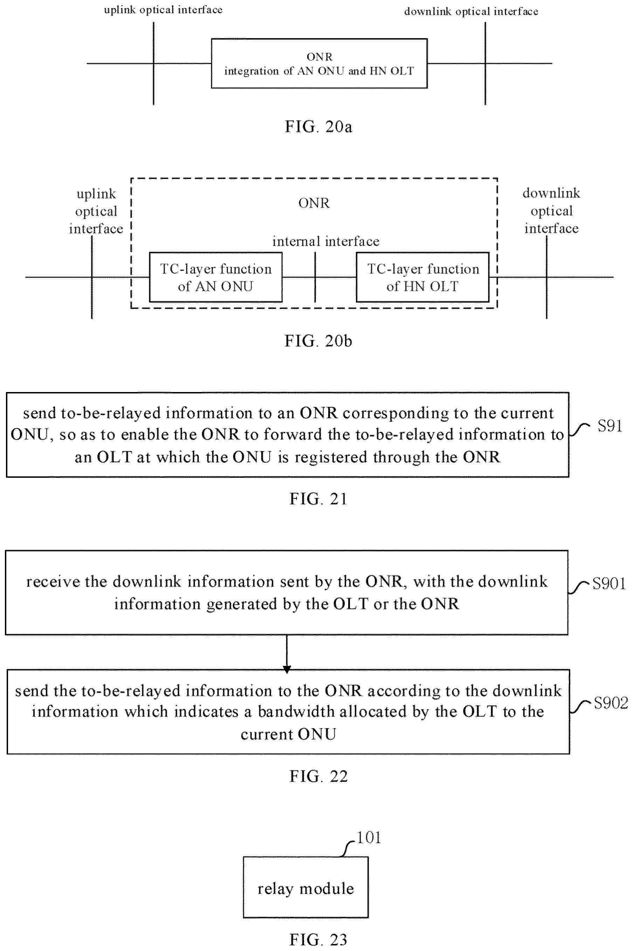

In the communication method provided by the present disclosure, the ONR is the integration of an Access Network (AN) ONU and a Home Network (HN) OLT, has a straight-through PON layer, and completes the relaying in TC layers such as relaying of the PLOAM message, the OMCI message, and the GEM frame. The ONR may serve as an ONU downstream from the OLT, and may also serve as an OLT upstream from an ONU. As shown in FIG. 20a and FIG. 20b, the present disclosure provides two implementation examples of the ONR, with the ONR provided between an uplink optical interface and a downlink optical interface and having both a TC-layer function of the AN ONU and a TC-layer function of the HN OLT. As shown in FIG. 20a, the AN ONU and the HN OLT may be integrated into one ONR chip, in which case, the relaying in the TC layer is simple, but the chip has a relatively high cost. As shown in FIG. 20b, an internal interface as a TC-layer relay interface is reserved between the AN ONU and the HN OLT, in which case, the chip has a relatively low cost, but the TC-layer relay interface needs to be defined, which is complicated to implement.

In one aspect of the present disclosure, there is provided a communication method applied to an OLT, and the communication method includes: sending to-be-relayed information to an ONR corresponding to the current OLT, so as to enable the ONR to forward the to-be-relayed information to a corresponding ONU which is registered at the current OLT through the ONR.

The communication method applied to the OLT according to the present disclosure is performed in cooperation with the communication method applied to the ONR according to the present disclosure, so that information interaction between the OLT and the ONR can be achieved, and information interaction between the OLT and the ONU can also be achieved through the ONR.

The OLT may further receive uplink information which is sent by the ONU and relayed and forwarded by the ONR. Accordingly, in some implementations, the communication method may further include: receiving and processing the uplink information relayed by the ONR.

In one aspect of the present disclosure, there is provided a communication method applied to an ONU. As shown in FIG. 21, the communication method includes the following operation S91:
operation S91, sending to-be-relayed information to an ONR corresponding to the current ONU, so as to enable the ONR to forward the to-be-relayed information to an OLT at which the ONU is registered through the ONR.

In some implementations, before sending the to-be-relayed information to the ONR corresponding to the current ONU (i.e. operation S91), the ONU receives downlink information which is generated by the OLT or the ONR and sent by the ONR. Accordingly, operation S91 may include sending the to-be-relayed information to the ONR corresponding to the current ONU according to the downlink information. As shown in FIG. 22, the communication method may include the following operations S901 and S902:
operation S901, receiving the downlink information sent by the ONR, with the downlink information generated by the OLT or the ONR; and
operation S902, sending the to-be-relayed information to the ONR corresponding to the current ONU according to the downlink information which indicates a bandwidth allocated by the OLT to the current ONU.

In some implementations, sending the to-be-relayed information to the ONR corresponding to the current ONU (i.e. operation S91) includes sending the to-be-relayed information within a bandwidth allocated by the OLT or the ONR to the current ONU.

In some implementations, the communication method may further include: receiving and processing the downlink information relayed by the ONR.

Based on the same technical concept, an embodiment of the present disclosure further provides an ONR, which may include a first storage module having stored thereon at least one of a first computer-executable program or a second computer-executable program; and at least one first controller. When the at least one first controller calls the first computer-executable program, the aforesaid ONU registration method applied to the ONR may be implemented; and when the at least one first controller calls the second computer-executable program, the aforesaid communication method applied to the ONR may be implemented.

As shown in FIG. 23, an embodiment of the present disclosure further provides an ONR, which may include a relay module 101.

The relay module 101 is configured to relay an interactive content between an OLT and an ONU, so as to enable the ONU and the OLT to complete discovery and ranging processes.

The ONR shown in FIG. 23 and provided in the embodiment of the present disclosure is mainly configured to perform the aforesaid ONU registration method applied to the ONR.

In some implementations, the ONR further includes a discovery and ranging module configured to complete the discovery and ranging processes with the OLT.

In some implementations, the relay module 101 is configured to:
according to discovery information of a discovered ONU, send final identity information, which is assigned to the discovered ONU by the OLT corresponding to the current ONR, to the discovered ONU; and
store the final identity information of the discovered ONU.

In some implementations, the relay module 101 is configured to:
send the discovery information of the discovered ONU to the OLT;
receive the final identity information assigned to the discovered ONU by the OLT; and send the final identity information to the discovered ONU.

In some implementations, the ONR further includes a processing module configured to assign temporary identity information to the discovered ONU according to the discovery information, and replace the locally stored temporary identity information of the discovered ONU with the final identity information of the discovered ONU.

In some implementations, the ONR pre-stores a list of final identity information assigned to ONUs by the OLT, and the relay module 101 is configured to:
determine final identity information corresponding to the discovery information according to the discovery information of the discovered ONU;
take the determined final identity information as the final identity information of the discovered ONU; and
send the final identity information to the discovered ONU.

In some implementations, the discovery and ranging module is configured to send an ONU discover and ranging request to discover the ONU, and obtain the discovery information of the discovered ONU.

In some implementations, the relay module 101 is further configured to generate a local ONU discover and ranging request according to an ONU discover and ranging request sent by the OLT; and send the local ONU discover and ranging request.

In some implementations, a time difference between a moment of generating the local ONU discover and ranging request and a moment of receiving the ONU discover and ranging request sent by the OLT is within a first preset duration range.

In some implementations, the discovery and ranging module is further configured to generate, after receiving an ONU discover and ranging response corresponding to the local ONU discover and ranging request, a local ONU discover and ranging response, and send the local ONU discover and ranging response to the OLT.

In some implementations, the ONR may further include a receiving module configured to receive the final identity information assigned to the discovered ONU by the OLT; and the ONR may further include a storage module configured to store the final identity information of the discovered ONU, and send the final identity information to the discovered ONU.

In some implementations, the receiving module is configured to receive transmission channel information and transmission port information which are equivalent to the final identity information of the discovered ONU and sent by the OLT.

The processing module 101 is further configured to send the transmission channel information and the transmission port information to the discovered ONU.

The storage module is further configured to store the transmission channel information and the transmission port information of the discovered ONU.

In some implementations, the transmission channel information includes transmission container (T-CONT) information sent by the OLT with a PLOAM message, and the transmission port information includes an XGEM Port-ID sent by the OLT with an OMCI message.

In some implementations, the T-CONT information includes an Alloc-ID (an Allocation Identifier), and is carried in the PLOAM message by the OLT.

In some implementations, the OMCI message and service data are sent in an XGEM frame format by the OLT.

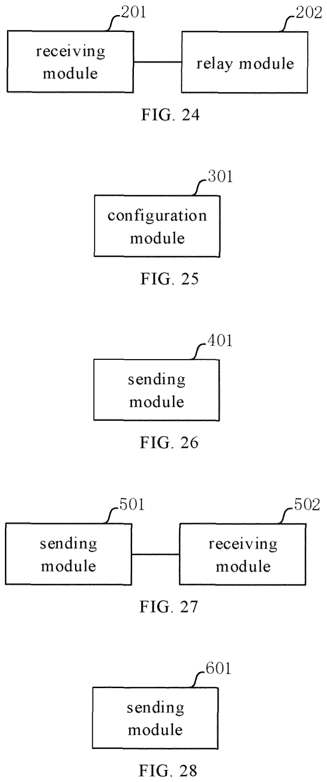

As shown in FIG. 24, an embodiment of the present disclosure further provides an ONR configured to perform a communication method, and the ONR may include a receiving module 201 and a relay module 202.

The receiving module 201 is configured to receive to-be-relayed information, which is sent from an OLT or an ONU, with the ONU being an ONU registered at the OLT through the current ONR and having final identity information assigned by the OLT through the current ONR.

The relay module 202 is configured to relay the to-be-relayed information between the OLT and the ONU registered at the OLT through the current ONR, with the final identity information of the ONU stored in the current ONR.

The ONR shown in FIG. 24 and provided in the embodiment of the present disclosure is mainly configured to perform the aforesaid communication method applied to the ONR.

In some implementations, a time difference between a moment of receiving the to-be-relayed information and a moment of relaying the to-be-relayed information is within a second preset duration range.

In some implementations, the ONR further includes a processing module configured to:
in a case where the received information is downlink information, obtain a destination address in the downlink information through analysis; and
in a case where the destination address is an address of an ONU downstream from the current ONR, determine the downlink information as the to-be-relayed information.

Accordingly, the relay module 202 is further configured to forward the downlink information to the ONU downstream from the current ONR.

In some implementations, in a case where the destination address is an address of the current ONR, the ONR further includes a storage module configured to store the downlink information, with the downlink information including at least one of the following information:
bandwidth information assigned by the OLT to the ONU registered at the OLT through the current ONR;
a Port-ID configured by the OLT with an OMCI message for the ONU registered at the OLT through the current ONR; or
T-CONT information configured by the OLT for the ONU registered at the OLT through the current ONR.

In some implementations, the downlink information is a bandwidth entry in a BWmap message, and the processing module is further configured to:
analyze the bandwidth entry in the downlink information to obtain an Alloc-ID of the bandwidth entry; and
in a case where the Alloc-ID of the bandwidth entry is an Alloc-ID of the ONU downstream from the current ONR, the relay module 202 is further configured to forward the bandwidth entry to the ONU downstream from the current ONR, and locally reserve an uplink bandwidth corresponding to the bandwidth entry.

In some implementations, the downlink information includes a PLOAM message, and the processing module is further configured to:
analyze an ONU-ID field of the PLOAM message to obtain an ONU-ID carried in the PLOAM message; and
in a case where the ONU-ID carried in the PLOAM message is an ONU-ID of an ONU downstream from the current ONR, the relay module 202 is further configured to forward the PLOAM message to the ONU downstream from the current ONR.

In some implementations, the downlink information is an XGEM frame sent by the OLT, and the processing module is further configured to analyze a Port-ID field of the XGEM frame to obtain a Port-ID carried in the XGEM frame. In a case where the Port-ID carried in the XGEM frame is a Port-ID of the ONU downstream from the current ONR, the relay module 202 is further configured to forward the XGEM frame to the ONU downstream from the current ONR.

In some implementations, the receiving module 201 is further configured to receive uplink information received within the uplink bandwidth allocated by the OLT to the ONU registered at the OLT through the current ONR, and the relay module 202 is configured to forward the uplink information to the OLT.

In some implementations, the processing module is further configured to allocate an uplink bandwidth to an ONU downstream from the current ONR.

In some implementations, the receiving module 201 is further configured to receive the uplink information within the bandwidth allocated by the current ONR to the downstream ONU; and the processing module is further configured to locally process the uplink information. The relay module 202 is further configured to forward the locally processed uplink information to another ONU downstream from the current ONR.

In some implementations, the relay module 202 is configured to relay and forward the to-be-relayed information at a same position in a service period.

It should be understood that the ONR provided in the embodiment of the present disclosure can be configured to perform the corresponding ONU registration method applied to the ONR as described above besides being configured to perform the aforesaid communication method applied to the ONR.

Based on the same technical concept, an embodiment of the present disclosure further provides an OLT, which may include a second storage module having stored thereon at least one of a third computer-executable program or a fourth computer-executable program; and at least one second controller. When the at least one second controller calls the third computer-executable program, the aforesaid ONU registration method applied to the OLT may be implemented; and when the at least one second controller calls the fourth computer-executable program, the aforesaid communication method applied to the OLT may be implemented.

As shown in FIG. 25, an embodiment of the present disclosure further provides an OLT, which may include a configuration module 301.

The configuration module 301 is configured to coordinate with an ONR to assign final identity information to an ONU.

In some implementations, the configuration module 301 is configured to: according to discovery information of the ONU discovered by the ONR corresponding to the current OLT, assign the final identity information to the corresponding ONU; and send the final identity information to the ONR corresponding to the current OLT, so as to enable the ONR to forward the final identity information to the corresponding ONU.

The OLT shown in FIG. 25 and provided in the embodiment of the present disclosure is mainly configured to perform the aforesaid ONU registration method applied to the OLT.

In some implementations, the OLT further includes a receiving module configured to receive the discovery information of the ONU discovered by the ONR sent by the ONR.

In some implementations, the configuration module 301 is configured to configure a list of final identity information and send the list of final identity information to the ONR, so as to enable the ONR to determine, after receiving the discovery information of the ONU discovered by the ONR, the final identity information corresponding to the discovery information from the list of final identity information and send the determined final identity information to the ONU discovered by the ONR.

In some implementations, the configuration module 301 is configured to assign the final identity information to the ONU according to an ONU discover response relayed by the ONR.

In some implementations, the OLT further includes a processing module configured to send an ONR discover request, and determine a discovered ONR as the ONR corresponding to the current OLT.

In some implementations, the configuration module 301 is further configured to send T-CONT information and an XGEM-Port-ID, which are equivalent to the final identity information of the discovered ONU, to the ONR, so as to enable the ONR to relay the T-CONT information and the XGEM-Port-ID, which are equivalent to the final identity information of the discovered ONU, to the discovered ONU, with the T-CONT information sent by the current OLT with a PLOAM message, and the XGEM-Port-ID sent by the current OLT with an OMCI message.

As shown in FIG. 26, the present disclosure further provides an OLT, which may include a sending module 401.

The sending module 401 is configured to send to-be-relayed information to an ONR corresponding to the current OLT, so as to enable the ONR to forward the to-be-relayed information to a corresponding ONU which is registered at the current OLT through the ONR.

The OLT shown in FIG. 26 and provided in the embodiment of the present disclosure is mainly configured to perform the aforesaid communication method applied to the OLT.

In some implementations, the OLT may further include a processing module configured to receive and process uplink information relayed by the ONR.

It should be understood that the OLT provided in the embodiment of the present disclosure can be configured to perform the corresponding communication method applied to the OLT as described above besides being configured to perform the aforesaid ONU registration method applied to the OLT.

Based on the same technical concept, an embodiment of the present disclosure further provides an ONU, which may include a third storage module having stored thereon at least one of a fifth computer-executable program or a sixth computer-executable program; and at least one third controller. When the at least one third controller calls the fifth computer-executable program, the aforesaid ONU registration method applied to the ONU may be implemented; and when the at least one third controller calls the sixth computer-executable program, the aforesaid communication method applied to the ONU may be implemented.

As shown in FIG. 27, the present disclosure further provides an ONU, including a sending module 501 and a receiving module 502.

The sending module 501 is configured to provide discovery information to an ONR which discovers the current ONU.

The receiving module 502 is configured to receive final identity information corresponding to the current ONU sent by the ONR, with the final identity information assigned by an OLT corresponding to the ONR, so as to enable the current ONU to be registered at the OLT through the ONR.

The ONU shown in FIG. 27 and provided in the embodiment of the present disclosure is mainly configured to perform the aforesaid ONU registration method applied to the ONU.

In some implementations, the receiving module 502 is further configured to: receive transmission channel information and transmission port information which are equivalent to the final identity information of the current ONU and sent by the ONR.

In some implementations, the transmission channel information includes transmission container (T-CONT) information sent by the OLT with a PLOAM message, and the transmission port information includes an XGEM Port-ID sent by the OLT with an OMCI message.

In some implementations, the T-CONT information includes an Alloc-ID (an Allocation Identifier).

As shown in FIG. 28, the present disclosure further provides an ONU, including a sending module 601.

The sending module 601 is configured to send to-be-relayed information to an ONR corresponding to the current ONU, so as to enable the ONR to forward the to-be-relayed information to an OLT at which the ONU is registered through the ONR.

The ONU shown in FIG. 28 and provided in the embodiment of the present disclosure is mainly configured to perform the aforesaid communication method applied to the ONU.

In some implementations, the ONU further includes a receiving module configured to receive downlink information sent by the ONR, with the downlink information generated by the OLT or the ONR; and the sending module 601 is configured to send the to-be-relayed information to the ONR according to the downlink information which indicates a bandwidth allocated by the OLT to the current ONU.

In some implementations, the sending module 601 is configured to send the to-be-relayed information within a bandwidth allocated by the OLT or the ONR to the current ONU.

In some implementations, the ONU further includes a processing module configured to receive and process the downlink information relayed by the ONR.

Based on the same technical concept, an embodiment of the present disclosure further provides an optical communication system, including an OLT, an ONR, and an ONU, with the OLT being corresponding to at least one ONR, and the ONR being corresponding to at least one ONU. The ONR is the aforesaid ONR; the OLT is the aforesaid OLT; and the ONU is the aforesaid ONU.

An embodiment of the present disclosure further provides a computer-readable storage medium storing a computer program which, when executed by a processor, implements the aforesaid ONU registration method or the aforesaid communication method. It should be understood by those of ordinary skill in the art that the functional modules/units in all or some of the operations, the systems, and the devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. An Optical Network Unit (ONU) registration method applied to an Optical Network Relay (ONR), comprising: relaying an interactive content between an Optical Line terminal (OLT) and an ONU, so as to enable the ONU and the OLT to complete discovery and ranging processes.

2. The ONU registration method of claim 1, further comprising: before relaying the interactive content between the OLT and the ONU so as to enable the ONU and the OLT to complete the discovery and ranging processes, completing discovery and ranging processes by the current ONR and the OLT.

3. The ONU registration method of claim 1, wherein relaying the interactive content between the OLT and the ONU comprises:
according to discovery information of a discovered ONU, sending final identity information, which is assigned to the discovered ONU by the OLT corresponding to the current ONR, to the discovered ONU; and
storing the final identity information of the discovered ONU.

4. The ONU registration method of claim 3, wherein sending, according to the discovery information of the discovered ONU, the final identity information, which is assigned to the discovered ONU by the OLT corresponding to the current ONR, to the discovered ONU comprises:
sending the discovery information of the discovered ONU to the OLT;
receiving the final identity information assigned to the discovered ONU by the OLT; and
sending the final identity information to the discovered ONU.

5. The ONU registration method of claim 4, further comprising:
before sending the discovery information of the discovered ONU to the OLT, assigning temporary identity information to the discovered ONU according to the discovery information; and
after receiving the final identity information assigned to the discovered ONU by the OLT, storing the final identity information of the discovered ONU comprises:
replacing the locally stored temporary identity information of the discovered ONU with the final identity information of the discovered ONU.

6. The ONU registration method of claim 3, wherein the ONR pre-stores a list of final identity information assigned to ONUs by the OLT, and sending, according to the discovery information of the discovered ONU, the final identity information, which is assigned to the discovered ONU by the OLT corresponding to the current ONR, to the discovered ONU comprises:
determining final identity information corresponding to the discovery information according to the discovery information of the discovered ONU and the list of final identity information;
taking the determined final identity information as the final identity information of the discovered ONU; and
sending the final identity information to the discovered ONU.

7. The ONU registration method of any one of claims 3 to 6, further comprising:
before sending, according to the discovery information of the discovered ONU, the final identity information, which is assigned to the discovered ONU by the OLT corresponding to the current ONR, to the discovered ONU, sending an ONU discover and ranging request to discover the ONU, and obtaining the discovery information of the discovered ONU.

8. The ONU registration method of claim 1, wherein relaying the interactive content between the OLT and the ONU comprises:
generating a local ONU discover and ranging request according to an ONU discover and ranging request sent by the OLT; and
sending the local ONU discover and ranging request.

9. The ONU registration method of claim 8, wherein a time difference between a moment of generating the local ONU discover and ranging request and a moment of receiving the ONU discover and ranging request sent by the OLT is within a first preset duration range.

10. The ONU registration method of claim 8, further comprising:
after sending the local ONU discover and ranging request and receiving an ONU discover and ranging response corresponding to the local ONU discover and ranging request, generating a local ONU discover and ranging response, and sending the local ONU discover and ranging response to the OLT.

11. The ONU registration method of claim 8, further comprising:
receiving the final identity information assigned to the discovered ONU by the OLT; and
storing the final identity information of the discovered ONU, and sending the final identity information to the discovered ONU.

12. The ONU registration method of any one of claims 1 to 11, further comprising:
receiving transmission channel information and transmission port information which are equivalent to the final identity information of the discovered ONU and sent by the OLT;
sending the transmission channel information and the transmission port information to the discovered ONU; and
storing the transmission channel information and the transmission port information of the discovered ONU.

13. The ONU registration method of claim 12, wherein the transmission channel information comprises transmission container (T-CONT) information sent by the OLT with a Physical Layer Operations, Administration and Maintenance (PLOAM) message, and
the transmission port information comprises an extended passive-optical-access-system encapsulation-mode port number (XGEM Port-ID) sent by the OLT with an ONU Management and Control Interface (OMCI) message.

14. The ONU registration method of claim 13, wherein the T-CONT information comprises an Allocation Identifier (an Alloc-ID), and is carried in the PLOAM message by the OLT.

15. The ONU registration method of claim 13, wherein the OMCI message and service data are sent in a passive-optical-access-system encapsulation-mode (XGEM) frame format by the OLT.

16. An ONU registration method applied to an OLT, comprising:
coordinating with an ONR to assign final identity information to an ONU.

17. The ONU registration method of claim 16, wherein coordinating with the ONR to assign the final identity information to the ONU comprises:
according to discovery information of the ONU discovered by the ONR corresponding to the current OLT, assigning the final identity information to the corresponding ONU; and
sending the final identity information to the ONR corresponding to the current OLT, so as to enable the ONR to forward the final identity information to the corresponding ONU.

18. The ONU registration method of claim 17, further comprising:
before assigning, according to the discovery information of the ONU discovered by the ONR corresponding to the current OLT, the final identity information to the corresponding ONU, receiving the discovery information of the ONU discovered by the ONR sent by the ONR.

19. The ONU registration method of claim 16, wherein coordinating with the ONR to assign the final identity information to the ONU comprises:
configuring a list of final identity information and sending the list of final identity information to the ONR, so as to enable the ONR to determine, after receiving discovery information of the ONU discovered by the ONR, final identity information corresponding to the discovery information from the list of final identity information and send the determined final identity information to the ONU discovered by the ONR.

20. The ONU registration method of claim 16, wherein coordinating with the ONR to assign the final identity information to the ONU comprises:
assigning the final identity information to the ONU according to an ONU discover response relayed by the ONR.

21. The ONU registration method of claim 16, further comprising:
before coordinating with the ONR to assign the final identity information to the ONU, sending an ONR discover request; and
determining a discovered ONR as the ONR corresponding to the current OLT.

22. The ONU registration method of any one of claims 16 to 21, further comprising:
sending T-CONT information and an XGEM-Port-ID, which are equivalent to the final identity information of the discovered ONU, to the ONR, so as to enable the ONR to relay the T-CONT information and the XGEM-Port-ID, which are equivalent to the final identity information of the discovered ONU, to the discovered ONU, wherein the T-CONT information is sent by the current OLT with a PLOAM message, and the XGEM-Port-ID is sent by the current OLT with an OMCI message.

23. A communication method applied to an ONR, comprising:
receiving to-be-relayed information, which is sent from an OLT or an ONU, wherein the ONU is an ONU registered at the OLT through the current ONR and has final identity information assigned by the OLT through the current ONR; and
relaying the to-be-relayed information between the OLT and the ONU registered at the OLT through the current ONR, wherein the final identity information of the ONU is stored in the current ONR.

24. The communication method of claim 23, wherein a time difference between a moment of receiving the to-be-relayed information and a moment of relaying the to-be-relayed information is within a second preset duration range.

25. The communication method of claim 23, further comprising:
before receiving the to-be-relayed information, in a case where the received information is downlink information, obtaining a destination address in the downlink information through analysis;
in a case where the destination address is an address of an ONU downstream from the current ONR, the to-be-relayed information is the downlink information; and
relaying the to-be-relayed information between the OLT and the ONU registered at the OLT through the current ONR comprises: forwarding the downlink information to the ONU downstream from the current ONR.

26. The communication method of claim 25, wherein in a case where the destination address is an address of the current ONR, the communication method further comprises:
storing the downlink information, wherein the downlink information comprises at least one of the following information:
bandwidth information assigned by the OLT to the ONU registered at the OLT through the current ONR;
a Port-ID configured by the OLT for the ONU registered at the OLT through the current ONR; or
T-CONT information configured by the OLT for the ONU registered at the OLT through the current ONR.

27. The communication method of claim 25, wherein the downlink information is a bandwidth entry in a Bandwidth map (BWmap) message, and obtaining the destination address in the downlink information through analysis comprises:
analyzing the bandwidth entry to obtain an Alloc-ID of the bandwidth entry; and
in a case where the Alloc-ID of the bandwidth entry is an Alloc-ID of the ONU downstream from the current ONR, forwarding the downlink information to the ONU downstream from the current ONR comprises: forwarding the bandwidth entry to the ONU downstream from the current ONR, and locally reserving an uplink bandwidth corresponding to the bandwidth entry.

28. The communication method of claim 25, wherein the downlink information comprises a PLOAM message; and obtaining the destination address in the downlink information through analysis comprises:
analyzing an ONU-ID field of the PLOAM message to obtain an ONU-ID carried in the PLOAM message; and
in a case where the ONU-ID carried in the PLOAM message is an ONU-ID of the ONU downstream from the current ONR, forwarding the downlink information to the ONU downstream from the current ONR comprises: forwarding the PLOAM message to the ONU downstream from the current ONR.

29. The communication method of claim 25, wherein the downlink information is an XGEM frame sent by the OLT, and obtaining the destination address in the downlink information through analysis comprises:
analyzing a Port-ID field of the XGEM frame to obtain a Port-ID carried in the XGEM frame; and
in a case where the Port-ID carried in the XGEM frame is a Port-ID of the ONU downstream from the current ONR, forwarding the downlink information to the ONU downstream from the current ONR comprises: forwarding the XGEM frame to the ONU downstream from the current ONR.

30. The communication method of any one of claims 23 to 29, wherein receiving the to-be-relayed information comprises receiving uplink information received within an uplink bandwidth allocated by the OLT to the ONU registered at the OLT through the current ONR; and
relaying the to-be-relayed information between the OLT and the ONU registered at the OLT through the current ONR comprises: forwarding the uplink information to the OLT.

31. The communication method of claim 23, further comprising:
allocating an uplink bandwidth to an ONU downstream from the current ONR.

32. The communication method of claim 31, further comprising:
receiving uplink information within the bandwidth allocated by the current ONR to the downstream ONU; and
locally processing the uplink information, and forwarding the locally processed uplink information to another ONU downstream from the current ONR.

33. The communication method of any one of claims 23 to 32, wherein relaying the to-be-relayed information between the OLT and the ONU registered at the OLT through the current ONR comprises: relaying and forwarding the to-be-relayed information at a same position in a service period.

34. A communication method applied to an OLT, comprising:
sending to-be-relayed information to an ONR corresponding to the current OLT, so as to enable the ONR to forward the to-be-relayed information to a corresponding ONU, wherein the ONU is an ONU registered at the current OLT through the ONR.

35. The communication method of claim 34, further comprising:
receiving and processing uplink information relayed by the ONR.

36. An ONU registration method applied to an ONU, comprising:
providing discovery information to an ONR which discovers the current ONU; and
receiving final identity information corresponding to the current ONU sent by the ONR, with the final identity information assigned by an OLT corresponding to the ONR, so as to enable the current ONU to be registered at the OLT through the ONR.

37. The ONU registration method of claim 36, further comprising:
receiving transmission channel information and transmission port information which are equivalent to the final identity information of the current ONU and sent by the ONR.

38. The ONU registration method of claim 37, wherein the transmission channel information comprises T-CONT information sent by the OLT with a PLOAM message, and
the transmission port information comprises an XGEM Port-ID sent by the OLT with an OMCI message.

39. The ONU registration method of claim 38, wherein the T-CONT information comprises an Alloc-ID.

40. A communication method applied to an ONU, comprising:
sending to-be-relayed information to an ONR corresponding to the current ONU, so as to enable the ONR to forward the to-be-relayed information to an OLT at which the current ONU is registered through the ONR.

41. The communication method of claim 40, further comprising:
before sending the to-be-relayed information to the ONR corresponding to the current ONU, receiving downlink information sent by the ONR, with the downlink information generated by the OLT or the ONR; and
sending the to-be-relayed information to the ONR corresponding to the current ONU comprises: sending the to-be-relayed information to the ONR corresponding to the current ONU according to the downlink information, wherein the downlink information indicates a bandwidth allocated by the OLT to the current ONU.

42. The communication method of claim 40, wherein sending the to-be-relayed information to the ONR corresponding to the current ONU comprises: sending the to-be-relayed information within a bandwidth allocated by the OLT or the ONR to the current ONU.

43. The communication method of claim 40, further comprising: receiving and processing downlink information relayed by the ONR.

44. An ONR, comprising:
a first storage module having stored thereon at least one of a first computer-executable program or a second computer-executable program; and
at least one first controller, wherein, when the at least one first controller calls the first computer-executable program, the ONU registration method of any one of claims 1 to 15 is implemented; and when the at least one first controller calls the second computer-executable program, the communication method of any one of claims 23 to 33 is implemented.

45. An OLT, comprising:
a second storage module having stored thereon at least one of a third computer-executable program or a fourth computer-executable program; and
at least one second controller, wherein, when the at least one second controller calls the third computer-executable program, the ONU registration method of any one of claims 16 to 22 is implemented; and when the at least one second controller calls the fourth computer-executable program, the communication method of claim 34 or 35 is implemented.

46. An ONU, comprising:
a third storage module having stored thereon at least one of a fifth computer-executable program or a sixth computer-executable program; and
at least one third controller, wherein, when the at least one third controller calls the fifth computer-executable program, the ONU registration method of any one of claims 36 to 39 is implemented; and when the at least one third controller calls the sixth computer-executable program, the communication method of any one of claims 40 to 43 is implemented.

47. An optical communication system, comprising an OLT, an ONR, and an ONU, wherein the OLT corresponds to at least one ONR, the ONR corresponds to at least one ONU, the OLT communicates with the at least one ONR corresponding to the OLT, and the ONR communicates with the at least one ONU corresponding to the ONR; wherein,
the ONR is the ONR of claim 44;
the OLT is the OLT of claim 45; and
the ONU is the ONU of claim 46.

48. A computer-readable storage medium, which stores a computer program which, when executed by a processor, implements any one of:
the ONU registration method of any one of claims 1 to 22 or any one of claims 36 to 39; and
the communication method of any one of claims 23 to 35 or any one of claims 40 to 43.
